# EUROPEAN PATENT SPECIFICATION

(11) **EP 0 422 288 B1**
(45) Date of publication and mention of the grant of the patent: **06.04.1994**
(21) Application number: 89202527.1
(22) Date of filing: 08.10.1989
(51) Int. Cl.: G01G 19/18, G01G 15/00

(54) **Weight-checking apparatus**
Gewichtskontrollapparat
Contrôleur de poids

(43) Date of publication of application: 17.04.1991
(73) Proprietor: EERSTE NEDERLANDSE FABRIEK VAN WEEGWERKTUIGEN JAN MOLENSCHOT & ZOON B.V., NL-4800 DE Breda (NL)
(72) Inventor: Van Rootselaar, Jan, 3925 BD Scherpenzeel (NL)
(74) Representative: Van Assen, Jan Willem Bernard

(56) References cited:
- DE-A- 3 209 295
- FR-A- 2 555 740
- GB-A- 1 030 620
- NL-A- 7 413 191
- US-A- 3 828 869
- M. Kochsiek, (editor), Handbuch des Wägens, 1985, Braunschweig, DE, pages 541, 542

## Description

The invention relates to an apparatus for automatically weighing qualities of particle-like material such as grain for example with a set weight, comprising a weighing bunker, an automatic supply and discharge means for feeding the particle-like material to and from the bunker respectively, weighing means for the weighing bunker provided with a number of electrodynamic detectors at a number of suspension points for detecting the weight of the weighing bunker and for giving an electric signal which is proportional to the force exercised on the concerned detector and which signal is used for controlling the supply and discharge means, and in which weight-checking means are present for checking the correctness of the measured values given by the electrodynamic detectors for the final determination of the total weight of the weighing bunker.

Apparatus of this type is known from NL-A-7413191.

Alongside the obligation to check automatic weighing apparatus (like-charge weighers and gross-tare weighers) at regular intervals by means of calibrated weights, it is also necessary on the world grain market to have a checking facility incorporated in automatic weighing apparatus which makes it possible to monitor the indicated weights duringoperation, that is to say the so-called "dynamic check".

In the interests of the world grain market, automatic weighing apparatus in accordance with NL-A-7413191 is fitted with a so-called "Checking scale".

The checking scale comprises a weighing-plateau of sliding-weight which can be coupled via changeover apparatus to the weighing bunker lever-system with a ratio of 10 to 1 or 100 to 1 for example.

By stopping during operation with a full or empty weighing bunker, the content of the weighing bunker can be determined by means of checking weights on the weighing-plateau or by positioning the sliding-weight.

The result may be compared with the weight shown on the weight-indicating dial or with another form of weight indication.

A weighing apparatus with such a checking scale has a number of objections:
1. The conventional lever-system comprises many moving parts which are subject to wear and the possibility of breakdowns.
2. The checking-scale only partially checks the weighing system. Not all faults are detected in the transmissions.
3. An accurate check-weighing wastes operational time and is required to be carried out by the automatic weighing apparatus itself.
   There are no possibilities for exercising REMOTE-CONTROL.
4. Check-weightings hold up the weighing process and are disadvantageous to both the supply and discharge routes should these weightings take a long time.
5. Check-weightings are only carried out a few times per shift.
6. The results of the check-weightings cannot be automatically registered.
7. There is no possibility of determining whether the check-weightings have been carried out "correctly".

The object of the invention is to overcome these objections and to provide a weighing apparatus in which the checking function can also be fully automated.

This object is achieved by the invention inasmuch that the check-weighing means are secondary electrodynamic detectors the electric signal from which is compared with that of the primary electrodynamic detectors and the resulting signal is used for controlling the supply and discharge means, whereby a series of combined units of primary and secondary electrodynamic detectors are mechanically and serially mounted at a suspension point in such a manner that the secondary detector of a unit is subjected to the same weight loading as the concerned primary detector and checkes the signal therefrom.

Through the use of the invention a fully electronically-automated weighing and checking process is achieved. Furthermore by the use of load-detectors, a faster reaction and setting time is obtained in connection with installation arrangement and minimal deformation of the load-detectors themselves.

A large multiplication of the check-measurement and the electronic processing there off is effected.

Furthermore according to another favoured embodiment of the invention, the combined units comprise a frame of "U" form arranged horizontally so that the primary detector and the secondary detector are affixed to the upper and lower legs respectively of the frame of "U" form.

This gives the measurements so carried out a greater accuracy.Alongside this the check is effected automatically, thus without the intervention of the operator for each gross and tare weight takeover of a charge. Finally the check takes up no time since it is carried out during the stationary detection.

The invention is now to be described further with reference to the accompanying drawings showing several exemplary embodiments of the invention.

Fig. 1 shows a perspective view of a combined measuring and checking unit.

Fig. 1A shows a reduced-scale block diagram of the principles employed by the unit shown in fig.1.

Fig. 2 shows a block diagram of the principles of the electronic processing of the measured data obtained by a number of units according to fig. 1.

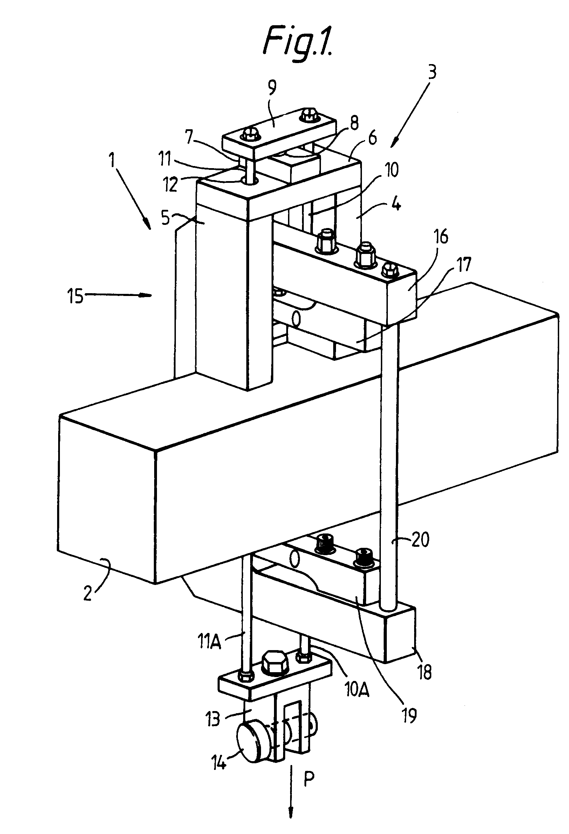

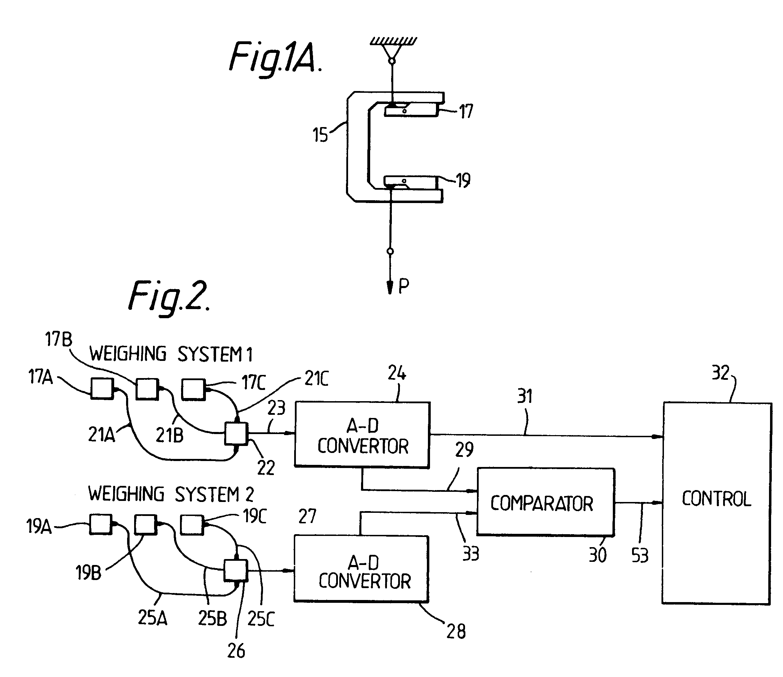

Fig. 1 shows in perspective a combined unit generally indicated by the reference numeral 1 and which is affixed to a fixedly installed beam 2 only part of which is shown. The beam 2 forms part of a fixedly installed frame (not shown).

A weighing bunker (not shown), for weighing quantities of particle-like material such as grain for example with a set weight, is arranged for vertical movement with respect to the fixed frame. A yoke generally indicated by the reference numeral 3 is placed on the beam 2. This yoke 3 comprises the vertical side plates 4 and 5 to which a horizontal connecting plate 6 is affixed. A carrier plate 7 is fitted to the horizontal connecting plate 6 for a ball socket 8 of a ball-and-socket support the ball of which (not shown) is affixed to the underside of the cross plate 9. Two vertically arranged tie rods 10 and 11 are affixed on each side of the cross plate 9 and also extend through the holes 12 (only one of which is show), through the horizontal plate 6.The tie rods 10 and 11 are fixedly connected at the lower side by a cross connection(not shown) to the upper electrodynamic detector (17). The tie rods 10A and 11A respectively are affixed at the lower side of the beam 2 to the support yoke 13 into which the force P applied by the weighing bunker via via the cross pin 14. The upper ends of the tie rods 10A and 10B respectively operatively act on the lower detector 19 via a cross-connection (not shown). A "U" form frame, generally indicated by the reference numeral 15, is arranged between the vertical side plates 4 and 5 of the yoke 3. A first electrodynamic detector 17 is affixed to the underside of the upper horizontal leg 16 of the frame 15 by means such as nuts and bolts. A second electrodynamic detector 19 is affixed to the lower horizontal leg 18 of the frame 15 by means such as nuts and bolts. These electrodynamic detectors are of a known type and form no part of the invention, thus will not be described further herein.

The outer side of the frame 15 of "U" form is closed off by a dismountable vertically arranged connecting rod 20. As will be seen in the schematic block-diagram fig. 1A, both electrodynamic detectors 17 and 19 are serially loaded by the weight P to be measured. In this arrangement, the primary detector is formed by the detector 17 and the secondary detector is formed by the detector 19, each of which gives its own signal. No connecting conductors to the detectors are shown in figs. 1 and 1A.

Fig. 2. is a schematic block-diagram of the electric circuitry. The primary detectors 17A, 17B and 17C are each connected by a conductor 21A, 21B and 21C respectively to the coupling apparatus 22 which in turn is connected to the Master Analogue/Digital converter 24 by the conductor 23. The secondary detectors 19A, 19B and 19C respectively to coupling apparatus 26 which in turn is connected to the Slave Analogue/Digital converter 28. On one side the Analogue/Digital converter 24 is coupled to a comparator 30 by means of a conductor 29 whilst on the other side it is coupled to the checking unit 32 by means of a conductor 31.

The Analogue/Digital converter 28 is coupled to the comparator 30 by means of the conductor 33 which in turn is connected to the control unit 32.

The analogue weight signal originating from the detectors 17 and 19 of the primary and secondary weighing system are first conducted to the Master Analogue/Digital converter 24 and Slave Analogue/Digital converter 28. Thereafter the digital signals originating here from are compared with on another by the comparator 30. If the difference lies outside of the permitted tolerances then the weighing process is interrupted by the control unit 32; after correction the weighing process can be resumed. Automatic registration can take place throughout the entire process. The accuracy of this system is so great that it is completely calibrateble.

The zero-setting of both of the analogue/digital converters (24,28) is achieved automatically at regular intervals-in-time by the control unit 32.

### ADVANTAGES

1. Through the use of the force detectors a fast reaction and setting time is obtained due to the manner in which they are installed and the minimal deformation which they undergo.
2. Checking takes place automatically (without operator intervention) with each gross and tare weight changeover of a charge.
3. The check takes no time in view of the fact that it is carried out during stationary detection.
4. A warning of small deviations and immediate interruption of the weighing process takes place in the event of large deviations occurring.
5. Little maintenance.

## Claims

1. Apparatus for automatically weighing quantities of particle-like material such as grain for example with a set weight, comprising a weighing bunker, an automatic supply and discharge means from the bunker respectively, weighing means for the weighing bunker provided with a number of electrodynamic detectors on a number of suspension points for detecting the weight of weighing bunker and for giving an electric signal which is proportional to the force exercised on the concerned detector and which signal is used for controlling the supply and discharge means, and in which weight-checking means are present for checking the correctness of the measured values given by the electrodynamic detectors for the final determination of the total weight of the weighing bunker,characterised in that the check-weighing means are secondary electrodynamic detectors (19)the electric signal from which is compared by a comparator(30)with that from primary electrodynamic detectors (17)and the resulting signal is used for controlling(32)the supply and discharge means, whereby
a series of combined units(1) of primary and secondary electrodynamic detectors(17,19)are mechanically and serially mounted at a suspension point in such a manner that the secondary detector(19)of a unit(1)is subjected to the same weight-loading(P)as the concerned primary detector(17) and the signal therefrom checked.

2. Apparatus as claimed in claim 1, characterised in that the combined units(1) comprise a vertical frame (15) of U-form in which the primary detector(17)is affixed to the upper leg(16)and the secondary detector(19)to the lower leg (18)of the frame of U-form whilst the outer side of the frame(15) of U-form is closed by a dismountable vertical connecting rod(20).

3. Apparatus as claimed in claim 1 or claim 2, characterised in that the weight-load(P) imposed on the unit (1)acts on the detectors(17,19)in a vertical line trough both detectors.

4. Apparatus as claimed in any one of claims 1 to 3 inclusive ,characterised ,that the loading on the upper detector(17) is achieved by a fixed cross-connection, the tie rods(10,11),the support plate(7)and the ball-and-socket support arrangement (8) whilst loading on the lower detector(19)is achieved by a fixed cross-connection.

5. Apparatus as claimed in any one of claims 1 to 4 inclusive ,characterised in that the primary detectors(17) together form the primary weighing system and the secondary detectors (19)together form the secodairy weighing system.

6. Apparatus as claimed in any one of claims 1 to 5 inclusive ,characterised in that the primary and secondary detectors(17 ,19)are each connected by a conductor(21;25) to an Analogue/Digital converter(24;28) which is again connected to the input of a comparator(30) the output of which is connected to the input of a control unit(32).

7. Apparatus as claimed in any one of claims 1 to 6 inclusive ,characterised that the Analogue/Digital converter(24)of the primary weighing system forms the master and that of the secondary the slave.

8. Apparatus as claimed in any one of claims 1 to 7 inclusive ,characterised in that the combination of primary and secondary electrodynamic detectors(17;19) at suspension points are matched to one another for so far as their temperature-behaviour characteristics are concerned.

9. Apparatus as claimed in any one of claims 1 to 8 inclusive,characterised in that the Analogue/Digital converter(24)of the primary weighing system and the Analogue/Digital converter(28)of the secondary weighing system each incorporate an adjustable input-filter by which means they can be equalized as far as their properties are concerned.

## Patentansprüche

1. Apparat zum automatischen Wiegen von Mengen eines teilchenförmigen Stoffes, wie zum Beispiel Getreide, mit einem festgelegten Gewicht, der einen Wiegebehälter, eine automatische Zuführ- und Ablaßvorrichtung in bzw. aus dem Behälter, Wiegevorrichtungen für den Wiegebehälter mit einer Anzahl elektrodynamischer Detektoren an einer Anzahl von Aufhängungspunkten, um das Gewicht des Behälters zu ermitteln und ein elektrisches Signal zu liefern, das proportional zu der auf den jeweiligen Detektor ausgeübten Kraft ist und das für die Steuerung der Zuführ- und Ablaßvorrichtung verwendet wird, umfaßt und Gewichtskontrollvorrichtungen zur Kontrolle der Richtigkeit der von den elektrodynamischen Detektoren gelieferten Meßwerte für die endgültige Bestimmung des Gesamtgewichts des Wiegebehälters aufweist,
**dadurch gekennzeichnet, daß**
die Gewichtskontrollvorrichtungen aus sekundären elektrodynamischen Detektoren (19) bestehen, deren elektrisches Signal von einem Komparator (30) mit dem der primären elektrodynamischen Detektoren (17) verglichen wird, und das daraus resultierende Signal für die Steuerung (32) der Zuführ- und Ablaßvorrichtung verwendet wird, wobei eine Reihe kombinierter Einheiten (1) aus primären und sekundären elektrodynamischen Detektoren (17, 19) mechanisch und in Reihe so an einem Aufhängepunkt befestigt sind, daß der Sekundärdetektor (19) einer Einheit (1) derselben Gewichtslast (P) wie der jeweilige Primärdetektor (17) ausgesetzt ist und dessen Signal überprüft wird.

2. Apparat nach Anspruch 1,
**dadurch gekennzeichnet, daß**
die kombinierten Einheiten (1) einen vertikalen U-förmigen Rahmen (15) umfassen, in dem der Primärdetektor (17) an dem oberen Schenkel (16) und der Sekundärdetektor (19) an dem unteren Schenkel (18) des U-förmigen Rahmens befestigt ist, während die Außenseite des U-förmigen Rahmens (15) durch einen abnehmbaren vertikalen Verbindungsstab (20) geschlossen wird.

3. Apparat nach Anspruch 1 oder 2,
**dadurch gekennzeichnet, daß**
die auf die Einheit (1) ausgeübte Gewichtslast (P) auf den Detektor (17, 19) in einer vertikalen Linie durch beide Detektoren wirkt.

4. Apparat nach einem der Ansprüche 1 bis 3,
**dadurch gekennzeichnet, daß**
die Belastung des oberen Detektors (17) durch eine feste Querverbindung, den Verbindungsstangen (10, 11), der Auflageplatte (7) und der Kugelzapfenlagervorrichtung (8) erreicht wird, während die Belastung des unteren Detektors (19) durch eine feste Querverbindung erreicht wird.

5. Apparat nach einem der Ansprüche 1 bis 4,
**dadurch gekennzeichnet, daß**
die Primärdetektoren (17) zusammen das primäre Wiegesystem und die Sekundärdetektoren (19) zusammen das sekundäre Wiegesystem bilden.

6. Apparat nach einem der Ansprüche 1 bis 5,
**dadurch gekennzeichnet, daß**
die Primär- und Sekundärdetektoren (17, 19) jeweils durch einen Leiter (21; 25) mit einem Analog-Digital-Umsetzer (24; 28) verbunden sind, der wiederum mit dem Eingang eines Komparators verbunden ist, dessen Ausgang mit dem Eingang einer Steuereinheit (32) verbunden ist.

7. Apparat nach einem der Ansprüche 1 bis 6,
**dadurch gekennzeichnet, daß**
der Analog-Digital-Umsetzer (24) des primären Wiegesystems den Hauptumsetzer und der des sekundären den Nebenumsetzer bildet.

8. Apparat nach einem der Ansprüche 1 bis 7,
**dadurch gekennzeichnet, daß**
die Kombination von primären und sekundären elektrodynamischen Detektoren (17; 19) an den Aufhängungspunkten bezüglich ihres Temperaturverhaltens aufeinander abgestimmt sind.

9. Apparat nach einem der Ansprüche 1 bis 8,
**dadurch gekennzeichnet, daß**
der Analog-Digital-Umsetzer (24) des primären Wiegesystems und der Analog-Digital-Umsetzer (28) des sekundären Wiegesystems jeweils einen einstellbaren Eingangsfilter umfassen, durch den sie bezüglich ihrer Eigenschaften aufeinander abgestimmt werden können.

## Revendications

1. Appareil pour le pesage automatique de quantités de matériau de type particules, comme par exemple du grain selon un poids prescrit, comprenant une nacelle de pesée, un moyen d'alimentation et de décharge automatiques de la nacelle, des moyens de pesage pour la nacelle de pesée munis de plusieurs détecteurs électrodynamiques sur plusieurs points de suspension pour détecter le poids de la nacelle de pesée et pour donner un signal électrique qui est proportionnel à la force exercée sur le détecteur concerné, lequel signal est utilisé pour commander le moyen d'alimentation et de décharge, et dans lequel des moyens de vérification du poids sont présents pour vérifier l'exactitude des valeurs mesurées données par les détecteurs électrodynamiques pour la détermination finale du poids total de la nacelle de pesée, ***caractérisé en ce que*** les moyens de vérification et de pesée sont des détecteurs électrodynamiques secondaires (19) dont le signal électrique est comparé par un comparateur (30) à celui de détecteurs électrodynamiques primaires (17) et dont le signal résultant est utilisé pour contrôler (32) le moyen d'alimentation et de décharge, au moyen de quoi une série d'unités mixtes (1) de détecteurs électrodynamiques primaires et secondaires (17, 19) sont montés mécaniquement et en série sur un point de suspension de manière telle que le détecteur secondaire (19) d'une unité (1) soit soumis à la même charge de poids (P) que le détecteur primaire (17) concerné et le signal de celui-ci vérifié.

2. Appareil selon la Revendication 1, ***caractérisé en ce que*** les unités mixtes (1) comprennent un cadre vertical (15) de forme en U dans lequel le détecteur primaire (17) est fixé au bras supérieur (16) et le détecteur secondaire (19) au bras inférieur (18) du cadre de forme en U, le côté "ouvert" du cadre (15) en U étant fermé par une tige (20) verticale de raccordement démontable.

3. Appareil selon la Revendication 1 ou la Revendication 2, ***caractérisé en ce que*** la charge de poids (P) imposée à l'unité (1) agit sur les détecteurs (17, 19) selon une ligne verticale traversant les deux détecteurs.

4. Appareil selon l'une quelconque des Revendications 1 à 3, ***caractérisé en ce que*** la mise en charge sur le détecteur supérieur (17) est obtenue par une connexion transversale fixe, les tirants de raccordement (10, 11), la plaque de support (7) et le bloc de support à rotule (8), la mise en charge sur le détecteur inférieur (19) étant obtenue par une connexion transversale fixe.

5. Appareil selon l'une quelconque des Revendications 1 à 4, ***caractérisé en ce que*** les détecteurs primaires (17) forment ensemble le système de pesée primaire et les détecteurs secondaires (19) forment ensemble le système de pesée secondaire.

6. Appareil selon l'une quelconque des Revendications 1 à 5, ***caractérisé en ce que*** les détecteurs primaires et secondaires (17, 19) sont individuellement raccordés par un fil conducteur (21 ; 25) à un convertisseur Analogique-Numérique (24 ; 28) qui est à son tour raccordé à l'entrée d'un comparateur (30) dont la sortie est raccordée à l'entrée d'une unité de contrôle (32).

7. Appareil selon l'une quelconque des Revendications 1 à 6, ***caractérisé en ce que*** le convertisseur Analogique-Numérique (24) du système de pesée primaire constitue le maître et celui du système secondaire constitue l'esclave.

8. Appareil selon l'une quelconque des Revendications 1 à 7, ***caractérisé en ce que*** l'appariement des détecteurs électrodynamiques primaires et secondaires (17 ; 19) aux points de suspension est réalisé entre eux en ce qui concerne leurs caractéristiques de comportement en température.

9. Appareil selon l'une quelconque des Revendications 1 à 8, ***caractérisé en ce que*** le convertisseur Analogique-Numérique (24) du système de pesée primaire et le convertisseur Analogique-Numérique (28) du système de pesée secondaire englobent chacun un filtre d'entrée réglable au moyen duquel ils peuvent être égalisés pour ce qui est de leurs propriétés.
